# EUROPEAN PATENT APPLICATION

(11) **EP 4 582 907 A1**
(43) Date of publication of application: **09.07.2025**
(21) Application number: 24206750.2
(22) Date of filing: 15.10.2024
(51) Int. Cl.: G06F 3/01

(54) **METHOD FOR PROVIDING VIRTUAL PLANE, HOST, AND COMPUTER READABLE STORAGE MEDIUM**

(30) Priority: 08.01.2024 US 202463618399 P; 08.08.2024 US 202418797530
(71) Applicant: HTC Corporation, Taoyuan City 330, (TW)
(72) Inventor: CIOU, Huei Jhen, 330 Taoyuan City (TW); CHENG, Chun-Wen, 330 Taoyuan City (TW)
(74) Representative: Carstens, Dirk Wilhelm

(57) **Abstract**

The embodiments of the disclosure provide a method for providing a virtual plane, a host, and a computer readable storage medium The method includes: tracking a hand gesture of a hand and determining whether the hand has performed a target gesture; in response to determining that the hand has performed the target gesture, providing the virtual plane at a reference height in a virtual world of a reality service; and displaying a height adjustment element in the virtual world, wherein the height adjustment element is used for adjusting a height of the virtual plane in the virtual world.

## Description

### CROSS-REFERENCE TO RELATED APPLICATION

This application claims the priority benefit of U.S. provisional application serial no. 63/618,399, filed on January 8, 2024. The entirety of the above-mentioned patent application is hereby incorporated by reference herein and made a part of this specification.

### BACKGROUND

### 1. Field of the Invention

The present disclosure generally relates to a mechanism for providing a reality service, in particular, to a method for providing a virtual plane, a host, and a computer readable storage medium.

### 2. Description of Related Art

In virtual reality (VR) technology, virtual desktop solutions enable users to operate another computer within a VR environment. This technology projects the user's computer desktop into the VR space, allowing them to access and control applications, files, and other functionalities seamlessly. Key features of virtual desktops include multitasking capabilities with multiple virtual screens, an immersive experience that reduces external distractions, and the flexibility to access the computer from anywhere without physical hardware interaction. These solutions are particularly beneficial for remote work, professional training, and immersive entertainment, utilizing streaming technology to transmit the desktop's video and audio content to the VR headset while providing low-latency control feedback for interactions like clicking, dragging, and keyboard input.

However, there are currently no better technological means to efficiently configure the appearance (e.g., the size and/or height) of virtual desktops in the VR environment.

### SUMMARY OF THE INVENTION

Accordingly, the disclosure is directed to a method for providing a virtual plane, a host, and a computer readable storage medium, which may be used to solve the above technical problems.

The embodiments of the disclosure provide a method for providing a virtual plane, applied to a host. The method includes: tracking, by the host, a hand gesture of a hand and determining, by the host, whether the hand has performed a target gesture; in response to determining that the hand has performed the target gesture, providing, by the host, the virtual plane at a reference height in a virtual world of a reality service; and displaying, by the host, a height adjustment element in the virtual world, wherein the height adjustment element is used for adjusting a height of the virtual plane in the virtual world.

The embodiments of the disclosure provide a host including a storage circuit and a processor. The storage circuit stores a program code. The processor is coupled to the storage circuit and accesses the program code to perform: tracking a hand gesture of a hand and determining whether the hand has performed a target gesture; in response to determining that the hand has performed the target gesture, providing a virtual plane at a reference height in a virtual world of a reality service; and displaying a height adjustment element in the virtual world, wherein the height adjustment element is used for adjusting a height of the virtual plane in the virtual world.

The embodiments of the disclosure provide a non-transitory computer readable storage medium, the computer readable storage medium recording an executable computer program, the executable computer program being loaded by a host to perform steps of: tracking a hand gesture of a hand and determining whether the hand has performed a target gesture; in response to determining that the hand has performed the target gesture, providing a virtual plane at a reference height in a virtual world of a reality service; and displaying a height adjustment element in the virtual world, wherein the height adjustment element is used for adjusting a height of the virtual plane in the virtual world.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the disclosure.
FIG. 1 shows a schematic diagram of a host according to an embodiment of the disclosure.
FIG. 2 shows a flow chart of the method for dynamically showing a virtual boundary according to an embodiment of the disclosure.
FIG. 3 shows an application scenario according to an embodiment of the disclosure.
FIG. 4 shows a schematic diagram of the triggered size adjustment element according to FIG. 3.
FIG. 5 shows a schematic diagram of triggering the height adjustment element according to FIG. 3.
FIG. 6 shows a schematic diagram of launching the virtual desktop application according to an embodiment of the disclosure.
FIG. 7 shows a schematic diagram of determining the virtual rectangular area according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

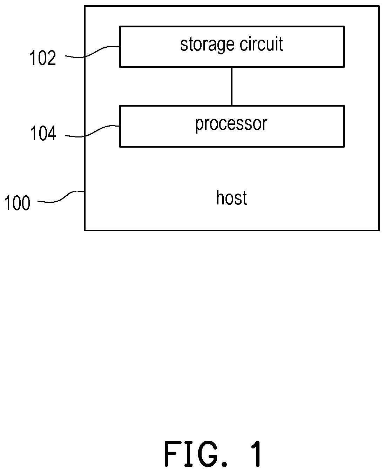

See FIG. 1, which shows a schematic diagram of a host according to an embodiment of the disclosure. In various embodiments, the host 100 can be any device capable of performing tracking functions (e.g., inside-out tracking and/or outside-in tracking) on one or more to-be-tracked objects (e.g., the hands of the user of the host 100) within a tracking range of the host 100. In the embodiments of the disclosure, the host 100 may be configured with a tracking camera having an image-capturing range corresponding to the tracking range. When the to-be-tracked objects (e.g., the hands) is within the tracking range, the cameras on the host 100 may capture images of the to-be-tracked objects, and the host 100 may track the pose of each to-be-tracked object based on the captured images, but the disclosure is not limited thereto.

In some embodiments, the host 100 can track the hand gesture(s) of the hand(s) in the tracking range. In one embodiment, the host 100 can render a hand object in the visual content provided by the host 100 according to the tracked hand gesture of the hand.

In various embodiments, the host 100 can be any smart device and/or computer device that can provide visual contents of reality services such as virtual reality (VR) service, augmented reality (AR) services, mixed reality (MR) services, and/or extended reality (XR) services, but the disclosure is not limited thereto. In some embodiments, the host 100 can be a head-mounted display (HMD) capable of showing/providing visual contents (e.g., AR/VR/MR contents) for the wearer/user to see. For better understanding the concept of the disclosure, the host 100 would be assumed to be an MR device (e.g., a MR HMD) for providing MR contents for the user to see, but the disclosure is not limited thereto.

In the embodiments where the visual content is the MR content, the MR content may include a pass-through image and at least one rendered virtual object overlaying on the pass-through image. In this case, the pass-through image is used as an underlying image of the visual content.

In one embodiment, the pass-through image may be rendered by, for example, the processor 104 of the host 100 based on the image captured by, for example, the front camera of the host 100. In this case, the user wearing the host 100 (e.g., the HMD) can see the real-world scene in front of the user via the pass-through image in the visual content provided by the host 100.

In one embodiment, the processor 104 may render one or more virtual object based on the MR application currently running on the host 100, and the processor 104 can overlay the rendered virtual object on the rendered pass-through image to form/generate the visual content (e.g., the MR content).

In one embodiment, the host 100 can be disposed with built-in displays for showing the visual contents for the user to see. Additionally or alternatively, the host 100 may be connected with one or more external displays, and the host 100 may transmit the visual contents to the external display(s) for the external display(s) to display the visual contents, but the disclosure is not limited thereto.

In FIG. 1, the host 100 includes a storage circuit 102 and a processor 104. The storage circuit 102 is one or a combination of a stationary or mobile random access memory (RAM), read-only memory (ROM), flash memory, hard disk, or any other similar device, and which records a plurality of modules that can be executed by the processor 104.

The processor 104 may be coupled with the storage circuit 102, and the processor 104 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, a graphic processing unit (GPU), and the like.

In the embodiments of the disclosure, the processor 104 may access the modules stored in the storage circuit 102 to implement the method for providing a virtual plane provided in the disclosure, which would be further discussed in the following.

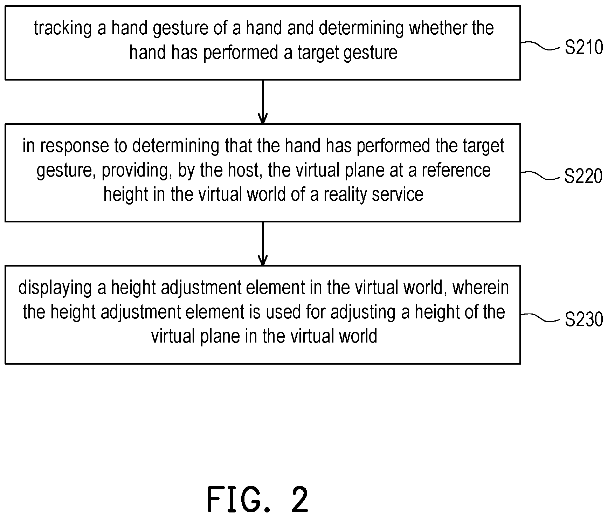

See FIG. 2, which shows a flow chart of the method for dynamically showing a virtual boundary according to an embodiment of the disclosure. The method of this embodiment may be executed by the host 100 in FIG. 1, and the details of each step in FIG. 2 will be described below with the components shown in FIG. 1.

In step S210, the processor 104 tracks a hand gesture of a hand and determines whether the hand has performed a target gesture.

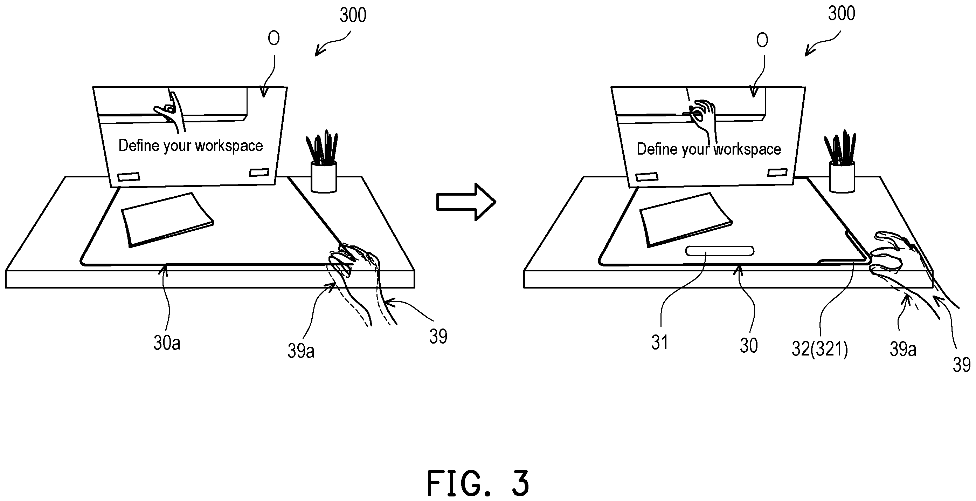

For better understanding, FIG. 3, which shows an application scenario according to an embodiment of the disclosure, would be used as an example, but the disclosure is not limited thereto.

In FIG. 3, the scenario may correspond to a desktop configuring process of an application of the reality service, wherein the application may be a virtual desktop application of an MR service, and the desktop configuring process may allow the user to determine the configuration (e.g., size and/or position) of the virtual desktop used in the virtual desktop application, but the disclosure is not limited thereto.

In the embodiment, the processor 104 may display a visual content 300 of a virtual world, wherein the virtual world in FIG. 3 may be assumed to be, for example, an MR world, but the disclosure is not limited thereto.

As can be seen from FIG. 3, the visual content 300 may include a pass-through image that shows the real world scene in front of the host 100 as the background, and the processor 104 may overlay one or more rendered virtual objects onto the background to form the visual content 300. In some embodiments, the pass-through image may be disabled, such that the visual content 300 only shows virtual objects/scenes, but the disclosure is not limited thereto.

In the embodiment, the virtual objects overlaid onto the background of the visual content 300 may include a window object O that exemplarily shows some instructions for interacting with the MR world, such as the instructions for configuring the virtual desktop, but the disclosure is not limited thereto.

In addition, the virtual objects overlaid onto the background of the visual content 300 may also include a hand object 39a, which is rendered based on the tracked hand gesture of the hand 39 (e.g., the right hand of the user of the host 100), but the disclosure is not limited thereto.

In the embodiments of the disclosure, the target gesture may be assumed to be, but not limited to, a pinch-and-release gesture, but the disclosure is not limited thereto.

In one embodiment, in response to determining that the hand 39 does not perform the target gesture, the processor 104 may keep tracking the hand gesture of the hand 39.

On the other hand, in step S220, in response to determining that the hand 39 has performed the target gesture, the processor 104 provides the virtual plane 30 at a reference height in the virtual world (e.g., the MR world) of a reality service (e.g., the MR service), wherein the reference height corresponds the hand 39.

In the scenario on the left of FIG. 3, when the pinch part of the pinch-and-release gesture (e.g., the target gesture) is detected, the processor 104 may display a virtual rectangular area 30a for the user to visually check whether the position of the virtual rectangular area 30a is acceptable. In the embodiment, the virtual rectangular area 30a may be understood as showing a reference appearance of the virtual desktop, but the disclosure is not limited thereto.

In FIG. 3, the virtual rectangular area 30a may be a virtual rectangular area displayed with a predetermined width and a predetermined length and having a corner aligned with a specific part (e.g., the angle formed by the index finger and the thumb) of the hand 39.

In this case, the user may drag the virtual rectangular area 30a to any desired position in the virtual world while maintaining the pinch part of the pinch-and-release gesture.

In FIG. 3, the desired position of the virtual rectangular area 30a may be the position that makes the height of the virtual rectangular area 30a correspond to the height of a real world desktop and one side of the virtual rectangular area 30a align with the side of the real world desk, but the disclosure is not limited thereto.

In one embodiment, once the user determines that the position of the virtual rectangular area 30a is acceptable (e.g., acceptable as being a virtual desktop), the user may perform the release part of the pinch-and-release gesture (e.g., the target gesture), as shown on the right of FIG. 3.

In this case, the processor 104 may determine that the hand 39 has performed the target gesture and accordingly provide the virtual plane 30 (e.g., the virtual desktop) at a reference height in the virtual world. In one embodiment, the processor 104 may fix the virtual rectangular area 30a as the provided virtual plane 30, which makes the virtual plane 30 also have the predetermined width and the predetermined length, but the disclosure is not limited thereto.

In FIG. 3, the reference height may be a height of the hand 39 detected to be performing the target gesture. From another perspective, the processor 104 may use the height of the hand object 39a in the virtual world as the height of the provided virtual plane 30, but the disclosure is not limited thereto.

In one embodiment, the processor 104 may directly provide the virtual plane 30 without firstly providing the virtual rectangular area 30a when detecting the target gesture. In this case, the processor 104 may not display the virtual rectangular area 30a when detecting the pinch part of the pinch-and-release gesture but directly display the virtual plane 30 when detecting the release part of the pinch-and-release gesture at the reference height, but the disclosure is not limited thereto.

In step S230, the processor 104 display a height adjustment element 31 in the virtual world, wherein the height adjustment element 31 is used for adjusting a height of the virtual plane 30 in the virtual world.

In the embodiment of the disclosure, the height adjustment element 31 may have a first visual type which can be adjusted/changed for providing visual aid.

For example, the processor 104 may determine whether a first distance between the hand 39 (and/or the hand object 39a) and the height adjustment element 31 is smaller than a first distance threshold.

In one embodiment, in response to determining that the first distance between the hand 39 and the height adjustment element 31 is not smaller than the first distance threshold (e.g., the scenario on the right of FIG. 3), the processor 104 may determine the first visual type of the height adjustment element 31 to be a predetermined type. In FIG. 3, the height adjustment element 31 with the predetermined type may be, for example, a transparent bar-shaped object, but the disclosure is not limited thereto.

In the embodiments of the disclosure, the relative position between the height adjustment element 31 and the virtual plane 30 may be fixed. That is, when the height adjustment element 31 is moved (e.g., upward or downward), the virtual plane 30 would be moved accordingly (e.g., upward or downward).

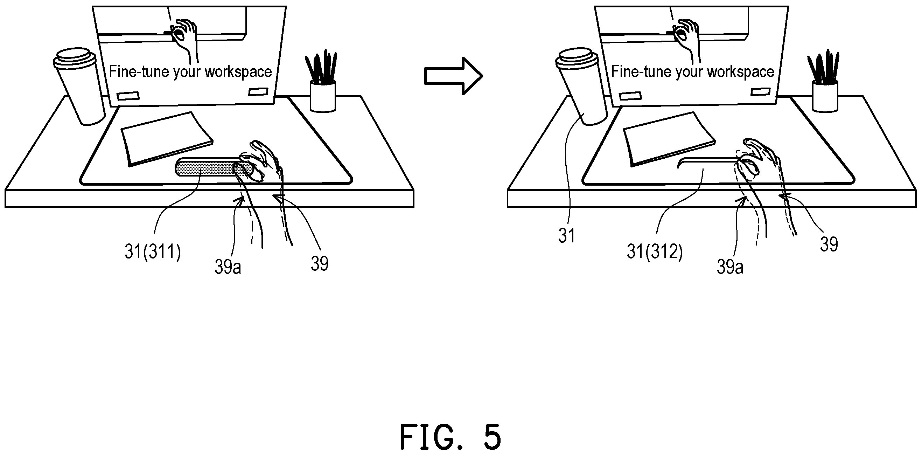

In one embodiment, in response to determining that the first distance between the hand 39 and the height adjustment element 31 is smaller than the first distance threshold, the processor 104 may change the first visual type of the height adjustment element 31 to a first type. In another embodiment, in response to determining that the hand 39 has triggered the height adjustment element 31, the processor 104 may further change the first visual type of the height adjustment element 31 to a second type. These scenarios would be further introduced in FIG. 5.

In one embodiment, the processor 104 may further provide a size adjustment element 32, wherein the size adjustment element 32 is used for adjusting a size of the virtual plane 30.

In the embodiment of the disclosure, the size adjustment element 32 may have a second visual type which can be adjusted/changed for providing visual aid.

For example, the processor 104 may determine whether a second distance between the hand 39 (and/or the hand object 39a) and the size adjustment element 32 is smaller than a second distance threshold.

In one embodiment, in response to determining that the second distance between the hand 39 and the size adjustment element 32 is not smaller than the second distance threshold, the processor 104 may determine the second visual type of the size adjustment element 32 to be a predetermined type. In one embodiment, the size adjustment element 32 with the predetermined type may be, for example, a transparent L-shaped object that aligns with the lower right corner of the virtual plane 30, but the disclosure is not limited thereto.

In one embodiment, in response to determining that the second distance between the hand 39 and the size adjustment element 32 is smaller than the second distance threshold (e.g., the scenario on the right of FIG. 3), the processor 104 may change the second visual type of the size adjustment element 32 to a third type 321. In FIG. 3, the size adjustment element 32 with the third type 321 may be a coloured L-shaped object that aligns with the lower right corner of the virtual plane 30, but the disclosure is not limited thereto.

In another embodiment, in response to determining that the hand 39 has triggered the size adjustment element 32, the processor 104 may further change the second visual type of the size adjustment element 32 to a fourth type.

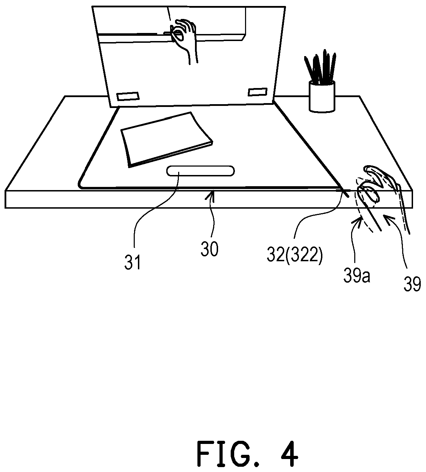

See FIG. 4, which shows a schematic diagram of the triggered size adjustment element according to FIG. 3.

In the embodiment, the user may perform a pinch gesture to trigger the size adjustment element 32 when the second distance between the hand 39 and the size adjustment element 32 is smaller than the second distance threshold.

In this case, the processor 104 may determine that the hand 39 has triggered the size adjustment element 32 and accordingly change the second visual type of the size adjustment element 32 to the fourth type 322. In FIG. 4, the size adjustment element 32 with the fourth type 322 may be a cross-shaped object whose center is aligned with the lower right corner of the virtual plane 30, but the disclosure is not limited thereto. In other embodiments, the size adjustment element 32 with the fourth type 322 may be implemented with another object having the colour or shape different from the size adjustment element 32 with the third type 321, but the disclosure is not limited thereto.

In this case, the user may drag the size adjustment element 32 with the fourth type 322 while maintaining the pinch gesture to adjust the size of the virtual plane 30, wherein the lower right corner of the virtual plane 30 would be maintained aligned with the center of the cross-shaped object during the user dragging the size adjustment element 32, but the disclosure is not limited thereto.

See FIG. 5, which shows a schematic diagram of triggering the height adjustment element according to FIG. 3.

In the scenario on the left of FIG. 5, the processor 104 may be assumed to determine that the first distance between the hand 39 and the height adjustment element 31 is smaller than the first distance threshold, and hence the processor 104 may change the first visual type of the height adjustment element 31 to the first type 311. In FIG. 5, the height adjustment element 31 with the first type 311 may be a coloured bar-shaped object, but the disclosure is not limited thereto.

In the scenario on the right of FIG. 5, the user may perform a pinch gesture to trigger the height adjustment element 31 when the first distance between the hand 39 and the height adjustment element 31 is smaller than the first distance threshold.

In this case, the processor 104 may determine that the hand 39 has triggered the height adjustment element 31 and accordingly change the first visual type of the height adjustment element 31 to the second type 312. In FIG. 5, the height adjustment element 31 with the second type 312 may be a coloured arc-shaped object. In other embodiments, the height adjustment element 31 with the second type 312 may be implemented with another object having the colour or shape different from the height adjustment element 31 with the first type 311, but the disclosure is not limited thereto.

In this case, the user may drag the height adjustment element 31 with the second type 312 upward/downward while maintaining the pinch gesture to adjust the height of the virtual plane 30.

In one embodiment, after displaying the virtual plane 30, the processor 104 may determine whether the hand 39 has performed a confirmation gesture. In various embodiments, the confirmation gesture may be any desired gesture of the designer, such as a fist gesture, but the disclosure is not limited thereto.

In one embodiment, in response to determining that the hand 30 has performed the confirmation gesture, it may represent that the size and position of the virtual plane 30 in the virtual world has been acceptable to the user. In this case, the processor 104 may fix the size and position of the virtual plane 30 in the virtual world.

On the other hand, in response to determining that the hand 30 has performed the confirmation gesture, it may represent that the user may intend to further adjust the size and position of the virtual plane 30. In this case, the processor 104 may keep tracking the hand gesture of the hand 39, but the disclosure is not limited thereto.

In FIG. 3 to FIG. 5, since the scenarios are assumed to be performing the desktop configuring process, the confirmation gesture may be used to finish the desktop configuring process.

In this case, in response to determining that the hand has performed the confirmation gesture, the processor 104 may store the size and position of the virtual plane 30 as a desktop configuration and finish the desktop configuring process.

In one embodiment, after fixing the size and position of the virtual plane 30 in the virtual world, the processor 104 may display at least one virtual object in the virtual world, wherein each of the at least one virtual object has a fixed relative position with the virtual plane 30. In the embodiment, since the size and position of the virtual plane 30 are fixed in the virtual world, the at least one virtual object would be displayed at a fixed position in the virtual world.

In some embodiments, the at least one virtual object may include one or more virtual screen for showing the contents on the screen of other devices directly or indirectly connected with the host 100.

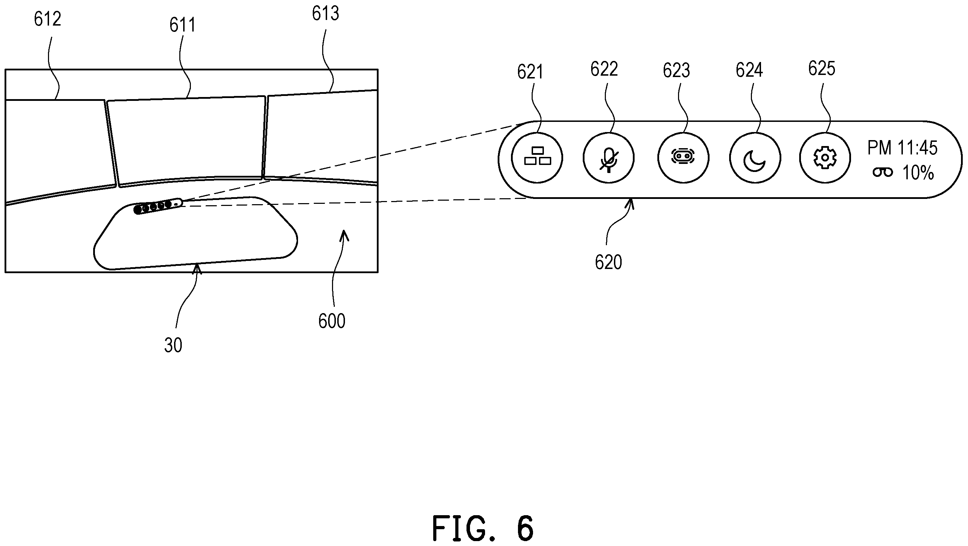

See FIG. 6, which shows a schematic diagram of launching the virtual desktop application according to an embodiment of the disclosure.

In FIG. 6, when the virtual desktop application is launched, the processor 104 may display the visual content 600 of the virtual world corresponding to the virtual desktop application. In the embodiment, the virtual world may be an MR world whose pass-through image is currently disabled, but the disclosure is not limited thereto. From another perspective, since the pass-through image is disabled, the MR world in FIG. 6 can also be understood as a VR world, but the disclosure is not limited thereto.

In the embodiment, the processor 104 may display the virtual plane 30 based on the stored desktop configuration and display virtual screens 611-613 in the virtual world, wherein each of the virtual screens 611-613 has a fixed relative position with the virtual plane 30.

In the embodiments of the disclosure, the processor 104 may receive a first video stream of a first screen from a computing device and display the first video stream in the virtual screen 611. In one embodiment, the computing device may be another computer device directly or indirectly connected with the host 100, but the disclosure is not limited thereto.

In one embodiment, the first video stream may show the contents on the first screen (e.g., the main screen) of the computer device, but the disclosure is not limited thereto.

In addition, the processor 104 may receive a second video stream of a second screen and a third video stream of a third screen from the computing device and display the second video stream and the third video stream in the virtual screen 612 and 613, respectively.

In one embodiment, the second video stream and third video stream may show the contents on the second screen (e.g., the left screen) and the third screen (e.g., the right screen) of the computer device, but the disclosure is not limited thereto.

In one embodiment, the processor 104 may further display a tool bar 620 in the virtual plane 30, wherein the tool bar 620 may include control elements 621-625.

In the embodiment, the control element 621 may be used to reconfigure the size and position of the virtual plane 30 in the virtual world. For example, when the user triggers the control element 621, the processor 104 may re-perform the method of FIG. 2 and the process in FIG. 3 to FIG. 5 to allow the user to reconfigure the size and position of the virtual plane 30, but the disclosure is not limited thereto.

In the embodiment, some of the control elements 621-625 may be used to control the computing device. For example, the control element 622 may be used to mute the computing device, such that the audio signals from the computing device would not be played by the host 100, but the disclosure is not limited thereto.

The control element 623 may be used to enable the pass-through image, such that the pass-through image can be provided as the background of the MR world.

The control element 624 may be used to activate the night mode of the host 100, and the control element 625 may be used to open the setting menu of the virtual desktop application, but the disclosure is not limited thereto.

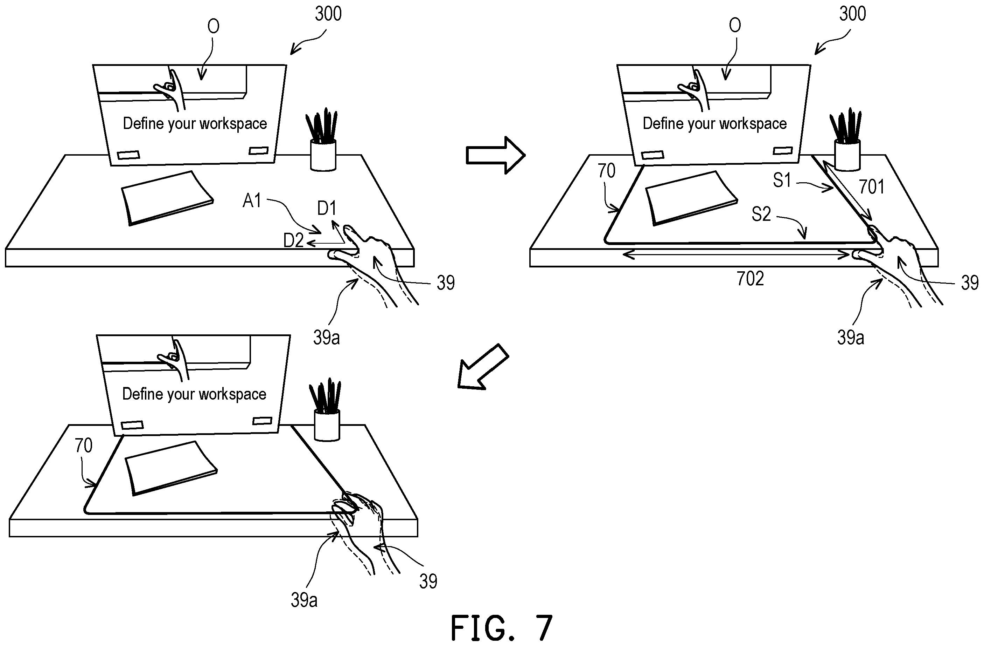

In some embodiments, the virtual plane 30 may be determined in particular ways, and the associated details would be introduced with FIG. 7.

See FIG. 7, which shows a schematic diagram of determining the virtual rectangular area according to an embodiment of the disclosure.

In one embodiment, after the processor 104 starts to track the hand gesture of the hand 39 during, for example, the desktop configuring process, the processor 104 may determine whether the hand 39 has performed an L-shape gesture.

In one embodiment, in response to determining that the hand 39 has performed an L-shaped gesture (e.g., the gesture shown on the upper left of FIG. 7), the processor 104 may accordingly determine a first direction D 1, a second direction D2, and a reference angle A1.

In the embodiment, the first direction D1 may be the direction pointed by, for example, the index finger of the hand 39, the second direction D2 may be the direction pointed by, for example, the thumb of the hand 39, and the reference angle A1 may be, for example, the angle formed by the index finger and the thumb, but the disclosure is not limited thereto.

Afterwards, the processor 104 may display a virtual rectangular area 70 including a plurality of corners in the virtual world, wherein one of the corners of the virtual rectangular area 70 is aligned with the reference angle A1.

In FIG. 7, the virtual rectangular area 70 may have a first side S 1 extending toward the first direction D1 from the reference angle A1 by a first predetermined length 701. In addition, the virtual rectangular area 70 may has a second side S2 extending toward the second direction D2 from the reference angle A1 by a second predetermined length 702, and a height of the virtual rectangular are 70 in the virtual world corresponds to the L-shaped gesture.

In one embodiment, in response to determining that the pinch-and-release gesture (e.g., the target gesture), the processor 104 may display the virtual rectangular area 70 as the provided virtual plane (e.g., the virtual plane 30 of FIG. 3) in the virtual world, and the subsequent operations may be referred to the descriptions associated with FIG. 3 to FIG. 5, which would not be repeated herein.

The disclosure further provides a computer readable storage medium for executing the method for providing a virtual plane. The computer readable storage medium is composed of a plurality of program instructions (for example, a setting program instruction and a deployment program instruction) embodied therein. These program instructions can be loaded into the host 100 and executed by the same to execute the method for providing a virtual plane and the functions of the host 100 described above.

In summary, the embodiments of the disclosure provide a novel way to provide the virtual plane (e.g., the virtual desktop), such that the user can configure the size and position of the virtual plane in the virtual world in a more intuitive and convenient way.

It will be apparent to those skilled in the art that various modifications and variations can be made to the structure of the present invention without departing from the scope or spirit of the disclosure. In view of the foregoing, it is intended that the present disclosure cover modifications and variations of this invention provided they fall within the scope of the following claims and their equivalents.

## Claims

1. A method for providing a virtual plane, applied to a host, comprising:
tracking, by the host, a hand gesture of a hand and determining, by the host, whether the hand has performed a target gesture;
in response to determining that the hand has performed the target gesture, providing, by the host, the virtual plane at a reference height in a virtual world of a reality service; and
displaying, by the host, a height adjustment element in the virtual world, wherein the height adjustment element is used for adjusting a height of the virtual plane in the virtual world.

2. The method according to claim 1, further comprising:
in response to determining that a first distance between the hand and the height adjustment element is smaller than a first distance threshold, changing a first visual type of the height adjustment element to a first type.

3. The method according to claim 2, further comprising:
in response to determining that the hand has triggered the height adjustment element, changing the first visual type of the height adjustment element to a second type.

4. The method according to claim 1, further comprising:
providing a size adjustment element, wherein the size adjustment element is used for adjusting a size of the virtual plane;
in response to determining that a second distance between the hand and the size adjustment element is smaller than a second distance threshold, changing a second visual type of the height adjustment element to a third type; and
in response to determining that the hand has triggered the size adjustment element, changing the second visual type of the size adjustment element to a fourth type.

5. The method according to claim 1, wherein the reference height is a height of the hand detected to be performing the target gesture.

6. The method according to claim 1, wherein the target gesture is a pinch-and-release gesture.

7. The method according to claim 1, wherein before determining whether the hand has performed the target gesture, the method further comprises:
in response to determining that the hand has performed an L-shaped gesture, accordingly determining a first direction, a second direction, and a reference angle;
displaying a virtual rectangular area comprising a plurality of corners in the virtual world, wherein one of the corners of the virtual rectangular area is aligned with the reference angle, the virtual rectangular area has a first side extending toward the first direction from the reference angle by a first predetermined length, the virtual rectangular area has a second side extending toward the second direction from the reference angle by a second predetermined length, and a height of the virtual rectangular area in the virtual world corresponds to the L-shaped gesture.

8. The method according to claim 7, wherein providing the virtual plane at the reference height in the virtual world of the reality service comprises:
displaying the virtual rectangular area as the provided virtual plane in the virtual world.

9. The method according to claim 1, further comprising:
in response to determining that the hand has performed a confirmation gesture, fixing a size and position of the virtual plane in the virtual world.

10. The method according to claim 9, wherein after fixing the size and position of the virtual plane in the virtual world, further comprising:
displaying at least one virtual object in the virtual world, wherein each of the at least one virtual object has a fixed relative position with the virtual plane.

11. The method according to claim 10, wherein the at least one virtual object comprises a first virtual screen, and the method further comprises:
receiving a first video stream of a first screen from a computing device and displaying the first video stream in the first virtual screen.

12. The method according to claim 11, wherein the at least one virtual object further comprises a second virtual screen, and the method further comprises:
receiving a second video stream of a second screen from the computing device and displaying the second video stream in the second virtual screen.

13. The method according to claim 11, wherein after fixing the size and position of the virtual plane in the virtual world, further comprising:
displaying a tool bar in the virtual plane, wherein the tool bar comprises a control element.

14. A host, comprising:
a non-transitory storage circuit, storing a program code; and
a processor, coupled to the non-transitory storage circuit and accessing the program code to perform:
tracking a hand gesture of a hand and determining whether the hand has performed a target gesture;
in response to determining that the hand has performed the target gesture, providing a virtual plane at a reference height in a virtual world of a reality service; and
displaying a height adjustment element in the virtual world, wherein the height adjustment element is used for adjusting a height of the virtual plane in the virtual world.

15. A non-transitory computer readable storage medium, the computer readable storage medium recording an executable computer program, the executable computer program being loaded by a host to perform steps of:
tracking a hand gesture of a hand and determining whether the hand has performed a target gesture;
in response to determining that the hand has performed the target gesture, providing a virtual plane at a reference height in a virtual world of a reality service; and
displaying a height adjustment element in the virtual world, wherein the height adjustment element is used for adjusting a height of the virtual plane in the virtual world.
